(19) Europäisches Patentamt
European Patent Office
Office européen des brevets

(11) **EP 2 003 745 A2**

(12) **EUROPEAN PATENT APPLICATION**
published in accordance with Art. 153(4) EPC

(43) Date of publication:
**17.12.2008 Bulletin 2008/51**

(51) Int Cl.:
***H01S 3/06*** (2006.01)

(21) Application number: **06834139.5**

(22) Date of filing: **06.12.2006**

(86) International application number:
**PCT/JP2006/324384**

(87) International publication number:
**WO 2007/116563 (18.10.2007 Gazette 2007/42)**

(84) Designated Contracting States:
**DE GB**

(30) Priority: **31.03.2006 JP 2006098101**

(71) Applicants:
• **The Furukawa Electric Co., Ltd.**
**Chiyoda-ku**
**Tokyo 100-8322 (JP)**
• **Totoku Electric Co., Ltd.**
**Shinjuku-ku**
**Tokyo 169-8543 (JP)**

(72) Inventors:
• **WAKO, Sugio**
**Ueda-shi, Nagano 386-0192 (JP)**

• **KOYAMA, Atsushi**
**Ueda-shi, Nagano 386-0192 (JP)**
• **MATSUURA, Hiroshi**
**Chiyoda-ku, Tokyo 100-8322 (JP)**
• **TAKAGI, Takeshi**
**Chiyoda-ku, Tokyo 100-8322 (JP)**
• **ABE, Satoru**
**Chiyoda-ku, Tokyo 100-8322 (JP)**
• **FUJISAKI, Akira**
**Chiyoda-ku, Tokyo 100-8322 (JP)**

(74) Representative: **Schwabe - Sandmair - Marx**
**Patentanwälte**
**Stuntzstrasse 16**
**81677 München (DE)**

(54) **LIGHT SOURCE**

(57) To provide a light source capable of generating a fundamental wave of a desired wavelength from a spontaneous emission light and tuning the wavelength of the fundamental wave in a bandwidth of 1060 nm to 1200 nm in the order of 1 nm, a light source 100 includes a semiconductor laser 1, a first optical waveguide 2, a second optical waveguide 3 that absorbs a pumping light emitted from the first optical waveguide 2 and emits a spontaneous emission light of a wavelength longer than a wavelength of the pumping light, a third optical waveguide 4, and a wavelength selecting element 6 provided between the second optical waveguide 3 and the third optical waveguide 4, wherein a resonator k is formed between the semiconductor laser 1 side and an output side to outside sandwiching the wavelength selecting element 6. The laser light is output with a wavelength tuned in the order of 1 nm by controlling length of the second optical waveguide 3.

FIG.1

## Description

### TECHNICAL FIELD

The present invention relates to a light source that emits a laser light, and more particularly, to a light source for a light source unit used in a laser microscope, a biomedical analyzer, a precise measuring instrument, and the like.

### BACKGROUND ART

A wavelength of a light obtained from a conventional light source includes an oscillation wavelength of a semiconductor laser and an SHG (second harmonic generation) and a THG (third harmonic generation) of the oscillation wavelength of the semiconductor laser, and the like, from which a desired wavelength is used. For example, a wavelength in a bandwidth of 530 nm to 600 nm used in a laser microscope, a biomedical analyzer including a spectrofluorometer and a bioanalyzer, a precise measuring instrument, and the like, is generated from an SHG of a fundamental wave having a predetermined wavelength generated from a bandwidth of 1060 nm to 1200 nm. A typical light source that generates such fundamental wave uses an optical fiber as a gain medium. For example, the light source includes at least a pumping light source, an optical fiber, and an optical resonator. A pumping light emitted from the pumping light source is input to the optical fiber to generate a spontaneous emission light in the optical fiber, and a fundamental wave of a predetermined wavelength is oscillated, so that the fundamental wave is finally emitted from the fiber. Such type of optical fiber laser using an optical fiber is disclosed in Patent Document 1.

Patent Document 1: Japanese Patent Application Laid-open No. 2005-12008

### DISCLOSURE OF INVENTION

### PROBLEM TO BE SOLVED BY THE INVENTION

However, in such a light source, an efficient way to generate a fundamental wave of a desired wavelength with stability is not known. Therefore, to obtain desired characteristics, a fine tuning is needed by changing characteristics of optical components constituting the light source. Furthermore, there is a problem that a condition to generate a stable fundamental wave of a desired wavelength can be hardly achieved because the wavelength and the power of the fundamental wave shows a random fluctuation due to individual difference in the characteristics of the components. Therefore, it is hard to perform a fine tuning of the wavelength of the fundamental wave, and there is a problem that it is difficult to apply the light source to an application that requires high wavelength accuracy, for example, an application that generates an SHG in the bandwidth of 530 nm to 600 nm from the fundamental wave in the bandwidth of 1060 nm to 1200 nm.

The present invention has been made to solve the above problems in the conventional technology and it is an object of the present invention to provide a light source capable of generating a fundamental wave of a desired wavelength from a spontaneous emission light and tuning the wavelength of the fundamental wave in the bandwidth of 1060 nm to 1200 nm in the order of 1 nm.

### MEANS FOR SOLVING PROBLEM

According to the first aspect of the present invention, a light source emits a laser light by oscillating a spontaneous emission light in a resonator. The light source includes a semiconductor laser; a first optical waveguide that guides a pumping light output from the semiconductor laser; a second optical waveguide that absorbs the pumping light output from the first optical waveguide and emits a spontaneous emission light having a wavelength longer than a wavelength of the pumping light; a third optical waveguide that guides a light output from the second optical waveguide to outside; at least one wavelength selecting element provided between the second optical waveguide and the third optical waveguide; and a resonator formed between the semiconductor laser side and an output side to outside sandwiching the wavelength selecting element. A wavelength of the laser light is set by controlling length of the second optical waveguide.

According to the second aspect of the present invention, a light source emits a laser light by oscillating a spontaneous emission light in a resonator. The light source includes a semiconductor laser; a first optical waveguide that guides a pumping light output from the semiconductor laser; a second optical waveguide that absorbs the pumping light output from the first optical waveguide and emits a spontaneous emission light having a wavelength longer than a wavelength of the pumping light; a third optical waveguide that guides a light output from the second optical waveguide to outside; at least one wavelength selecting element provided between the second optical waveguide and the third optical waveguide; and a resonator formed between the semiconductor laser side and an output side to outside sandwiching the wavelength selecting element. A wavelength of the laser light is set by controlling temperature of the second optical waveguide.

According to the third aspect of the present invention, a light source emits a laser light by oscillating a spontaneous emission light in a resonator. The light source includes a semiconductor laser; a first optical waveguide that guides a pumping light output from the semiconductor laser; a second optical waveguide that absorbs the pumping light output from the first optical waveguide and emits a spontaneous emission light having a wavelength longer than a wavelength of the pumping light; a third optical waveguide that guides a light output from the second optical waveguide to outside; at least one wavelength selecting element provided between the second optical waveguide and the third optical waveguide; and a resonator formed between the semiconductor laser side and an output side to outside sandwiching the wavelength selecting element. A wavelength of the laser light is set by controlling concentration of rare-earth element doped in the second optical waveguide.

According to the fourth aspect of the present invention, a light source emits a laser light by oscillating a spontaneous emission light in a resonator. The light source includes a semiconductor laser; a first optical waveguide that guides a pumping light output from the semiconductor laser; a second optical waveguide that absorbs the pumping light output from the first optical waveguide and emits a spontaneous emission light having a wavelength longer than a wavelength of the pumping light; a third optical waveguide that guides a light output from the second optical waveguide to outside; at least one wavelength selecting element provided between the second optical waveguide and the third optical waveguide; and a resonator formed between the semiconductor laser side and an output side to outside sandwiching the wavelength selecting element. Length, temperature, and concentration of rare-earth element of the second optical waveguide and reflectivities of reflecting mirrors at both facets of the resonator are set such that output power of the laser light is maximized at a wavelength at which transmissivity of the wavelength selecting element is maximized.

According to the fifth aspect of the present invention, a light source emits a laser light by oscillating a spontaneous emission light in a resonator. The light source includes a semiconductor laser; a first optical waveguide that guides a pumping light output from the semiconductor laser; a second optical waveguide that absorbs the pumping light output from the first optical waveguide and emits a spontaneous emission light having a wavelength longer than a wavelength of the pumping light; a third optical waveguide that guides a light output from the second optical waveguide to outside; at least one wavelength selecting element provided between the second optical waveguide and the third optical waveguide; and a resonator formed between the semiconductor laser side and an output side to outside sandwiching the wavelength selecting element. A wavelength of the laser light is set by controlling reflectivity of a facet of the resonator.

According to the sixth aspect of the present invention, the wavelength selecting element is an etalon filter.

According to the seventh aspect of the present invention, the second optical waveguide is an optical fiber that includes a core and at least two cladding layers surrounding the core, and at least the core is doped with rare-earth element. The rare earth includes, for example, Er (erbium), Yb (ytterbium), or both Er and Yb.

According to the eighth aspect of the present invention, the wavelength selecting element has a function of a polarizer.

EFFECT OF THE INVENTION

The light source according to the present invention is capable of generating a fundamental wave of a desired wavelength from a spontaneous emission light by controlling the length of the second optical waveguide, the temperature of the second optical waveguide, or the concentration of the rare earth in the second optical waveguide, by optimizing a combination of at least two of the above factors, or by controlling the reflectivity of the facets forming the resonator. Furthermore, with the three optical waveguides and the resonator, the light source is capable of generating a fundamental wave in the bandwidth of 1060 nm to 1200 nm from a pumping light of, for example, 915 nm wavelength emitted from the semiconductor laser and stabilizing the wavelength and the power of the fundamental wave. The light source is also capable of tuning the wavelength of the fundamental wave in the bandwidth of 1060 nm to 1200 nm in the order of 1 nm. Therefore, the light source according to the present invention is capable of generating a fundamental wave as a source for an SHG in the bandwidth of 530 nm to 600 nm used in a laser microscope, a spectrofluorometer, and the like, which require high stability of the optical power and high wavelength accuracy, consequently enabling fluorescent analysis of various proteins that are difficult to analyze. For this reason, the present invention can make a great contribution to industries.

BRIEF DESCRIPTION OF DRAWINGS

[Fig. 1] Fig. 1 is a schematic diagram illustrating a configuration of a light source according to Example 1 of the present invention.

[Fig. 2] Fig. 2 is a schematic diagram illustrating a detailed configuration of a resonator of the light source shown in Fig. 1.

[Fig. 3] Fig. 3 is a schematic diagram illustrating a configuration of a light source according to Example 2 of the present invention.

[Fig. 4] Fig. 4 is a schematic diagram illustrating a configuration of a light source according to Example 3 of the present invention.

[Fig. 5] Fig. 5 is a schematic diagram illustrating a configuration of a light source according to Example 4 of the present invention.

[Fig. 6] Fig. 6 is a schematic diagram illustrating a detailed configuration of a resonator of a light source according to Example 5 of the present invention.

[Fig. 7] Fig. 7 is a schematic diagram illustrating a detailed configuration of a resonator of a light source according to Example 6 of the present invention.

[Fig. 8] Fig. 8 is a schematic diagram illustrating a detailed configuration of a resonator of a light source according to Example 7 of the present invention.

EXPLANATIONS OF LETTERS OR NUMERALS

| 1 | semiconductor laser |
| 2 | first optical waveguide (multimode optical fiber) |
| 2b | reflection facet of resonator (dielectric multilayer film, output facet of first optical waveguide) |
| 3, 13 | second optical waveguide (rare-earth-doped double-cladding fiber (double-cladding fiber)) |
| 4 | third optical waveguide (polarization-maintaining optical fiber) |
| 4a | reflection facet of resonator (dielectric multilayer film (optical thinfilm), input facet of third optical waveguide) |
| 5a | lens unit (tilted-facet lens) |
| 5b | lens unit (tilted-facet lens) |
| 6 | wavelength selecting element (dielectric multilayer film or etalon) |
| 7, 17 | polarizer |
| 21 | core of first optical waveguide (multimode optical fiber) |
| 22 | cladding of first optical waveguide (multimode optical fiber) |
| 31 | core of second optical waveguide (double-cladding fiber) |
| 32 | 32 first cladding of second optical waveguide (double-cladding fiber) |
| 33 | second cladding of second optical waveguide (double-cladding fiber) |
| 41 | core of third optical waveguide (polarization-maintaining optical fiber) |
| 42 | cladding of third optical waveguide (polarization-maintaining optical fiber) |
| 100, 200, 300, 400 | light source |
| c | temperature controller (thermistor temperature controller) |
| h | heater (sheet heater) |
| k | resonator |
| y | dielectric multilayer film |
| y1, y2, y3, y4 | optical thinfilm |

BEST MODE(S) FOR CARRYING OUT THE INVENTION

A light source according to a first embodiment of the present invention is a light source described in a first aspect, and its configuration is explained in detail.

A semiconductor laser emits a pumping laser light, of which the wavelength depends on oscillation wavelength of a rare earth (for example, 900 nm to 1000 nm for Yb). Concerning the output power, a laser light with the power of hundreds mW to 5 W is acceptable at the wavelength of 915 nm.

A first optical waveguide is used to guide the pumping light received from the semiconductor laser efficiently to the second optical waveguide. The optical waveguide can be an optical fiber, a planar lightwave circuit, or the like. In the case of the optical fiber, a larger mode-field diameter is preferable, and by using a multimode optical fiber with the core diameter equal to or more than 50 $\mu$m and equal to or less than 400 $\mu$m, the pumping laser light can be efficiently guided to a second optical waveguide. The multimode optical fiber includes, for example, a core of 100-$\mu$m diameter and a cladding of 125-$\mu$m diameter.

The second optical waveguide is used to generate a spontaneous emission light of a wavelength longer than that of the pumping light by absorbing the pumping light received from the first optical waveguide to obtain a desired wavelength from the wavelength of the pumping light, which can be, for example, a rare-earth-doped fiber. The second optical waveguide absorbs the pumping light of, for example, 915 nm wavelength, and generates a spontaneous emission light in the bandwidth of 1060 nm to 1200 nm by the optical energy-level displacement.

A third optical waveguide is used to receive the light of the desired wavelength from the second optical waveguide and guide the light to the outside. Preferably, the optical waveguide is capable of maintaining a plane of polarization of the light during transmission and, for example, a polarization-maintaining optical fiber is used as the optical waveguide. By using the polarization-maintaining optical fiber, the third optical waveguide can maintain the plane of polarization of the fundamental wave in the bandwidth of, for example, 1060 nm to 1200 nm, and guide the fundamental wave to the outside, for example, to a nonlinear optical crystal in the following stage. Types of the polarization-maintaining optical fiber include an optical fiber having stress-applying members in the cladding, an optical fiber having holes formed in the longitudinal direction in the cladding, and an optical fiber having an elliptical core.

A wavelength selecting element preferably includes at least one of a dielectric multilayer film and an etalon filter. An example of the dielectric multilayer film is a bandpass filter. The wavelength selecting element selects the desired wavelength from the bandwidth of, for example, 1060 nm to 1200 nm and tunes a resonance wavelength, which finally generates a light of a sharp wavelength with a narrow full width at half maximum (FWHM). Although a single wavelength selecting element is sufficient to meet the purpose, a plurality of the wavelength selecting elements can be used to obtain more desired characteristics.

A resonator is formed between a facet closer to the semiconductor laser rather than the wavelength selecting element and an output facet to the outside. Particularly, an input facet of the resonator includes, for example, a filter device provided on at least one of an output facet of the first optical waveguide and an input facet of the second optical waveguide, which is used as one of the resonator mirrors between which a laser light oscillates. An output facet of the resonator includes, for example, a filter device provided on at least one of an input facet and an output facet of the third optical waveguide, which is used as the other of the resonator mirrors between which the laser light oscillates. With the resonator, the light source according to the present invention can oscillate the spontaneous emission light of the wavelength longer than that of the pumping light, generate the fundamental wave in the bandwidth of, for example, 1060 nm to 1200 nm, and emit the fundamental wave to the outside. An example of the filter device is a dielectric multilayer film.

The light source according to the first embodiment is capable of generating a fundamental wave of a desired wavelength from a spontaneous emission light (hereinafter, "generating a desired fundamental wave from a spontaneous emission light") by controlling length of the second optical waveguide. Furthermore, the light source is capable of tuning the wavelength of the fundamental wave in the order of 1 nm. Moreover, the light source is capable of generating a fundamental wave in the bandwidth of 1060 nm to 1200 nm from a pumping light of, for example, 915 nm wavelength emitted from the semiconductor laser using the first optical waveguide, the second optical waveguide, and the third optical waveguide. Furthermore, the light source is capable of generating a light of a sharp wavelength with a desired narrow FWHM by a bandpassing (wavelength-selecting) function of the wavelength selecting element.

To generate a desired fundamental wave from a spontaneous emission light by controlling the length of the second optical waveguide, the length of the second optical waveguide can be calculated to obtain a laser light having the desired wavelength based on a shift of the wavelength according to the length of the fiber; i.e., the wavelength shifts to longer wavelength by 25 nm with a change of the length of the second optical waveguide, for example, from 8 m to 30 m. The laser light is then guided to a wavelength conversion element (for example, PPLN), and thereby the light source generates an SHG light. Furthermore, by controlling the length of the second optical waveguide to avoid longitudinal mode split of the resonance light (energy spreading into a plurality of wavelengths), and thereby the light source stabilizes the resonance wavelength and consequently increases the power of the resonance light. Moreover, the light source can collect the longitudinal-mode-split spectra into a single wavelength by controlling the length of the second optical waveguide, whereby increasing efficiency of the power of the fundamental wave.

A light source according to a second embodiment of the present invention is a light source described in a second aspect.

Control of temperature of the second optical waveguide is achieved by setting the temperature of the second optical waveguide and maintaining the second optical waveguide at a constant temperature using a Peltier element or a heater and a temperature controller, and thereby the light source can generate a desired fundamental wave from a spontaneous emission light. For example, the wavelength shifts to longer wavelength by 1 nm with an increase of the temperature by 10°C, and therefore the temperature of the second optical waveguide can be calculated so that the laser light has the desired wavelength.

The light source according to the second embodiment brings the same effect as the light source according to the first embodiment. However, the temperature control enables finer tuning than control of the length of the optical fiber.

A light source according to a third embodiment of the present invention is a light source described in a third aspect. As for control of concentration of the rare earth in the second optical waveguide, increase of the concentration of the rare earth brings the same effect as extending the length of the second optical waveguide (wavelength shifts to longer wavelength), decrease of the concentration of the rare earth brings the same effect as shortening the length of the second optical waveguide (wavelength shifts to shorter wavelength), and therefore the light source is capable of generating a desired fundamental wave from a spontaneous emission light by controlling the concentration of the rare earth. The light source according to the third embodiment brings the same effect as the light source according to the first embodiment.

A light source according to a fourth embodiment of the present invention is a light source described in a fourth aspect.

Upon setting the fundamental wave from the spontaneous emission light, the length of the second optical waveguide, the temperature of the second optical waveguide, the concentration of the rare earth in the second optical waveguide, and reflectivities of the reflecting mirrors at both facets of the resonator can be set such that the output power of the oscillated laser light is maximized at a wavelength where the transmittance of the wavelength selecting element is maximized. For example, the wavelength is changed in the order of 10 nm by controlling the length of the second optical waveguide and fine tuning in the order of a few nm is performed by controlling the temperature, whereby a laser light of the desired wavelength is obtained. It is more preferable to place a wavelength selecting element that matches the desired wavelength in an optical path and control the temperature and the length of the optical fiber so that the maximum power is obtained at the desired wavelength. The light source according to the fourth embodiment brings the same effect as the light sources according to the first embodiment to the third embodiment.

A light source according to a fifth embodiment of the present invention is a light source described in a fifth aspect. The light source is capable of generating a desired fundamental wave from a spontaneous emission light by controlling reflectivity of an input facet and an output facet that are facets of the resonator. For example, the resonance wavelength shifts to longer wavelength by increasing the reflectivity of the output facet, and therefore the reflectivity can be determined so that the laser light has the desired wavelength. The light source according to the fifth embodiment brings the same effect as the light source according to the first embodiment.

A light source according to a sixth embodiment of the present invention is a light source described in a sixth aspect. More particularly, the light source uses an etalon filter as the wavelength selecting element.

A light source according to a seventh embodiment of the present invention is a light source described in a sixth aspect.

As the second optical waveguide, for example, a rare-earth-doped double-cladding fiber (hereinafter, "double cladding fiber") can be preferably used. The double cladding fiber can absorb the pumping light of, for example, 915 nm wavelength, and generate a spontaneous emission light in the bandwidth of 1060 nm to 1200 nm efficiently by the optical energy-level displacement. The double cladding fiber includes, for example, a core of 6-$\mu$m diameter, a first cladding of 125-$\mu$m diameter, and a second cladding of 250 $\mu$m diameter.

A light source according to an eighth embodiment of the present invention is a light source described in a seventh aspect.

The wavelength selecting element is, for example, an etalon, which has a function of the polarizer, otherwise the polarizer has a function of the etalon, whereby reducing the size of the optical system.

The present invention is explained below in more detail with reference to examples shown in the accompanying drawings. However, the present invention is not limited to the examples.

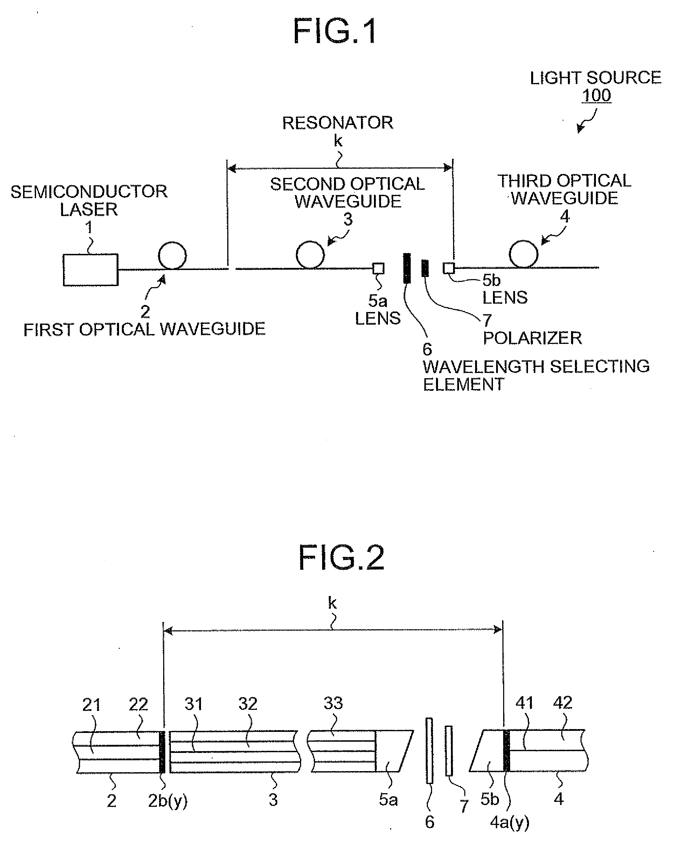

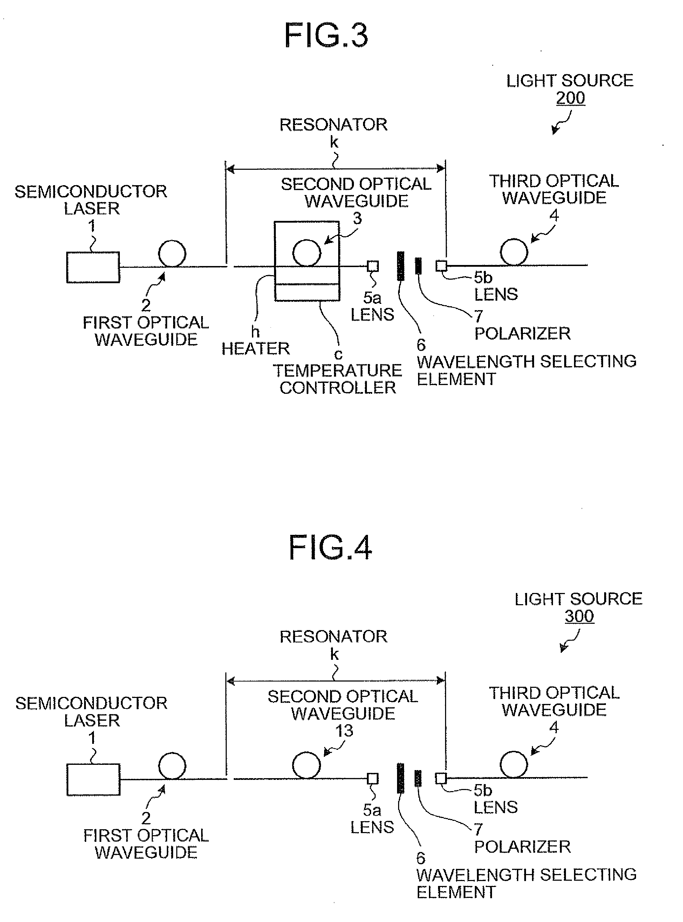

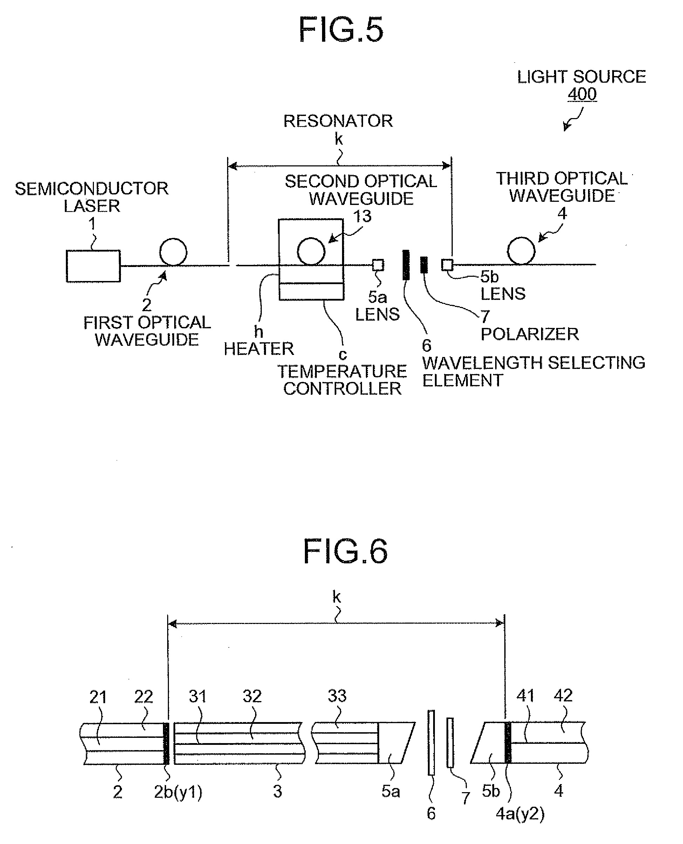

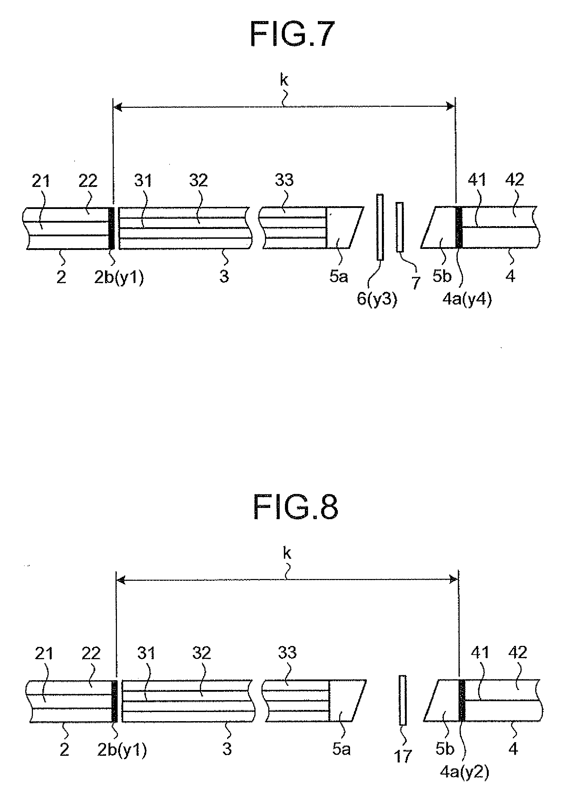

Fig. 1 is a schematic diagram illustrating a configuration of a light source according to Example 1 of the present invention. Fig. 2 is a schematic diagram illustrating a detailed configuration of a resonator of the light source shown in Fig. 1. Fig. 3 is a schematic diagram illustrating a configuration of a light source according to Example 2 of the present invention. Fig. 4 is a schematic diagram illustrating a configuration of a light source according to Example 3 of the present invention. Fig. 5 is a schematic diagram illustrating a configuration of a light source according to Example 4 of the present invention. Fig. 6 is a schematic diagram illustrating detailed configuration of a resonator of a light source according to Example 5 of the present invention. Fig. 7 is a schematic diagram illustrating detailed configuration of a resonator of a light source according to Example 6 of the present invention. Fig. 8 is a schematic diagram illustrating detailed configuration of a resonator of a light source according to Example 7 of the present invention. In the drawings, reference numeral 1 denotes a semiconductor laser, reference numeral 2 denotes a first optical waveguide (multimode optical fiber), reference numeral 2b denotes a reflection facet of a resonator (dielectric multilayer film, output facet of the first optical waveguide), reference numerals 3 and 13 denote second optical waveguides (rare-earth-doped double-cladding fiber (double-cladding fiber)), reference numeral 4 denotes a third optical waveguide (polarization-maintaining optical fiber), reference numerals 5a and 5b denote lens units (tilted-facet lens), reference numeral 4a denotes a reflection facet of the resonator (dielectric multilayer film (optical thinfilms y1 to y4), input facet of the third optical waveguide), reference numeral 6 denotes a wavelength selecting element (dielectric multilayer film or etalon), reference numerals 7 and 17 denote polarizers, reference numeral 21 denotes a core of the first optical waveguide (multimode optical fiber), reference numeral 22 denotes a cladding of the first optical waveguide (multimode optical fiber), reference numeral 31 denotes a core of the second optical waveguide (double-cladding fiber), reference numeral 32 denotes a first cladding of the second optical waveguide (double-cladding fiber), reference numeral 33 denotes a second cladding of the second optical waveguide (double-cladding fiber), reference numeral 41 denotes a core of the third optical waveguide (polarization-maintaining optical fiber), reference numeral 42 denotes a cladding of the third optical waveguide (polarization-maintaining optical fiber), reference numerals 100, 200, 300, and 400 denote light sources, reference symbol c denotes a temperature controller (thermistor temperature controller), reference symbol h denotes a heater (sheet heater), reference symbol k denotes a resonator, and reference symbol y denotes a dielectric multilayer film.

Example 1

Example 1 of the light source according to the present invention is explained with reference to Figs. 1 and 2. A light source 100 according to Example 1 includes a semiconductor laser 1, the first optical waveguide 2 that guides a pumping light received from the semiconductor laser 1, the second optical waveguide 3 that absorbs the pumping light received from the first optical waveguide 2 and emits a spontaneous emission light of a wavelength longer than that of the pumping light, the third optical waveguide 4 that guides the light received from the second optical waveguide 3 to the outside, and a single wavelength selecting element 6 provided between the second optical waveguide 3 and the third optical waveguide 4. The resonator k is formed between a facet closer to the semiconductor laser rather than the wavelength selecting element and an output facet to the outside, and the light source 100 emits a laser light generated by the resonator k oscillating the spontaneous emission light. The length of the second optical waveguide 3 is controlled to generate a desired fundamental wave from the spontaneous emission light.

The resonator k particularly includes the dielectric multilayer film y provided on an output facet 2b of the first optical waveguide 2 as one of reflection facets of the resonator and the other dielectric multilayer film y provided on an input facet 4a of the third optical waveguide 3 as the other reflection facet of the resonator. The lens units 5a and 5b are provided between the second optical waveguide 3 and the third optical waveguide 4 to optically couple the second optical waveguide 3 with the third optical waveguide 4, and the polarizer 7 is provided between the wavelength selecting element 6 and the lens unit 5b.

The semiconductor laser 1 is a semiconductor laser that emits a pumping light with the power of 1000 mW at the wavelength of 915 nm. The first optical waveguide 2 is a multimode optical fiber with a large core diameter, in which diameter of a core 21 is 100 $\mu$m and diameter of a cladding 22 is 125 $\mu$m. In the multimode optical fiber, the core diameter needs to be equal to or more than 50 $\mu$m and equal to or less than 400 $\mu$m.

The second optical waveguide 3 is a double-cladding fiber having Yb as the rare earth doped into its core, in which the diameter of a core 31 is 6 $\mu$m, the diameter of a first cladding 32 surrounding the core 31 is 125 $\mu$m, and the diameter of a second cladding 33 is 250 $\mu$m. In the double-cladding fiber, the core material needs to be rare-earth-doped (Yb or Er) silica, the core diameter needs to be equal to or more than 5 $\mu$m and equal to or less than 100 $\mu$m, material of the first cladding needs to be silica, diameter of the first cladding needs to be equal to or less than 1000 $\mu$m, material of the second cladding needs to be one of silica and resin, and diameter of the second cladding needs to be equal to or more than that of the first cladding and equal to or less than 2000 $\mu$m. The second optical waveguide 3 absorbs the pumping light received from the first optical waveguide 2, for example, the pumping light of 915 nm wavelength, and generates a spontaneous emission light in the bandwidth of 1060 nm to 1200 nm efficiently by the optical energy-level displacement.

In the polarization-maintaining optical fiber, the core material is silica (refractive index of the core > refractive index of the cladding), the core diameter is equal to or more than 5 $\mu$m and equal to or less than 100 $\mu$m, material of the cladding is silica (refractive index of the core > refractive index of the cladding), diameter of the cladding is equal to or more than the core diameter and equal to or less than 250 $\mu$m, and stress-applying members to form a panda shape are provided in the cladding. By using the polarization-maintaining optical fiber as the third optical waveguide 4, the light in the bandwidth of 1060 nm to 1200 nm is guided to the outside, which is not shown in the drawings, for example, to the nonlinear optical crystal in the following stage, while maintaining the plane of polarization of the light. The nonlinear optical crystal is capable of outputting a light of a wavelength in the bandwidth of, for example, 530 nm to 600 nm, which is the double cycle of the input wavelength in the bandwidth of 1060 nm to 1200 nm.

The third optical waveguide 4 is a PANDA fiber that includes a core 41 with the diameter of 6 $\mu$m, a cladding 42 with the diameter of 125 $\mu$m surrounding the core 41, and the stress-applying members (not shown) in the cladding 42.

The wavelength selecting element 6 is the bandpass filter formed with a single dielectric multilayer film a reflective-transmissive film with a proper reflectivity and transmittance formed on the glass substrate. In the wavelength selecting element 6, the FWHM in the transmission bandwidth is equal to or less than 3 nm and the transmittance of a center wavelength is equal to or more than 80%. The wavelength selecting element 6 selects the desired wavelength from the bandwidth of 1060 nm to 1200 nm to generate the resonance wavelength. The wavelength selecting element 6 finally generates a light of the sharp wavelength with the narrow FWHM.

The resonator k is formed between the dielectric multilayer film y on the output facet of the first optical waveguide 2 and the dielectric multilayer film y on the input facet of the third optical waveguide 4. Otherwise, the resonator k can be formed between the dielectric multilayer film on the output facet of the first optical waveguide 2 and the dielectric multilayer film on the output facet of the third optical waveguide 4, between the dielectric multilayer film on the input facet of the second optical waveguide 3 and the dielectric multilayer film on the input facet of the third optical waveguide 4, or between the dielectric multilayer film on the input facet of the second optical waveguide 3 and the dielectric multilayer film on the output facet of the third optical waveguide 4.

The lens units 5a and 5b are tilted-facet lenses. Otherwise, plano-convex lenses, graded index lenses, GIFs, or aspherical lenses can be used. Material of the lenses is one of silica and glass (BK7, borosilicate glass, or the like). The lens units 5a and 5b optically couple the second optical waveguide 3, the third optical waveguide 4, the wavelength selecting element 6, and the polarizer 7 with one another. Furthermore, the lens units 5a and 5b enable optical coupling of optical fibers with different diameters.

The polarizer 7 is a glass polarizer. Instead of the polarizer 7, a wave plate can be used. By aligning the planes of polarization in the second optical waveguide 3 and the third optical waveguide 4 using the polarizer 7, extinction ratio of the output light can be improved.

To control the length of the second optical waveguide 3, assuming that the wavelength is X (nm) with the fiber length of the double-cladding fiber being A (m) and that the wavelength is Y (nm) with the fiber length being B (m) (in which A>B and X>Y), when the desired wavelength of the laser light is H (nm), required fiber length L (m) is calculated by the following equation.

$$L=B+(A-B)\div(X-Y)\times(H-Y)$$

To give a specific example, assuming that the wavelength Y is 1080 nm with the fiber length B being 4 m, that the wavelength X is 1120 nm with the fiber length A being 50 m, and that the desired wavelength H of the laser light is 1110 nm, the required fiber length L is 38.5 m based on the above equation.

As a result, the light source 100 according to Example 1 generates a desired fundamental wave from a spontaneous emission light by controlling the length of the second optical waveguide 3. Furthermore, the light source 100 tunes the wavelength of the fundamental wave precisely in the order of 1 nm. Moreover, the light source 100 generates the fundamental wave in the bandwidth of 1060 nm to 1200 nm from the pumping light of, for example, 915 nm wavelength emitted by the semiconductor laser 1 using the first optical waveguide 2, the second optical waveguide 3, the third optical waveguide 4, and the resonator k. Furthermore, the light source 100 generates the light of the sharp wavelength with the desired narrow FWHM by the bandpass function of the wavelength selecting element 6. Example 2

Example 2 of the light source according to the present invention is explained with reference to Fig. 3. A light source 200 according to Example 2 basically has the same configuration as the light source 100 according to Example 1, while the light source 200 further includes the heater h and the temperature controller c with which the light source 200 controls the temperature of the double-cladding fiber in the second optical waveguide 3 and maintains a constant temperature, whereby generating a desired fundamental wave from a spontaneous emission light. For example, the wavelength shifts to longer wavelength by 1 nm by temperature increase of 10°C, and therefore the temperature of the double-cladding fiber is calculated so that the laser light has the desired wavelength. A sheet heater is used as the heater h and a thermistor temperature controller is used as the temperature controller c. Instead of the heater h, a Peltier element can be used.

As a result, the light source 200 according to Example 2 brings the same effect as the light source 100 according to Example 1. Moreover, the temperature control on the optical fiber achieves even finer tuning than control of the length of the optical fiber.

Example 3

Example 3 of the light source according to the present invention is explained with reference to Fig. 4. A light source 300 according to Example 3 basically has the same configuration as the light source 100 according to Example 1, while the light source 300 tunes the wavelength of the oscillated laser light using a second optical waveguide 13 in which the concentration of Yb, the rare earth, in the double-cladding fiber in the second optical waveguide 3 is controlled.

As a result, the light source 300 according to Example 3 brings the same effect as the light source 100 according to Example 1.

Example 4

Example 4 of the light source according to the present invention is explained with reference to Fig. 5. A light source 400 according to Example 4 basically has the same configuration as the light source 200 according to Example 2, while the light source 400 tunes the wavelength of the oscillated laser light by optimizing a combination of at least two of the length of the second optical waveguide, the temperature of the second optical waveguide, and the concentration of the rare earth in the second optical waveguide 3.

A specific example of optimizing a combination of the length and the temperature of the double-cladding fiber is given below. To generate a light of 1080 nm wavelength, when the length of the double-cladding fiber is 4 m, the wavelength of the oscillated laser is 1081 nm, and then the center wavelength of the laser light is fine-tuned to 1080 nm by cooling the optical fiber by 10°C from the room temperature.

As a result, the light source 400 according to Example 4 brings the same effect as the light source 100 according to Example 1.

Example 5

Example 5 of the light source according to the present invention is explained with reference to Fig. 6. A light source according to Example 5 basically has the same configuration as the light source 100 according to Example 1, while the wavelength of the oscillated laser is tuned by controlling reflectivity of the facets of the resonator k. More particularly, the resonator k includes the dielectric multilayer film formed on the output facet 2b of the first optical waveguide 2 as one of the reflection facets and the dielectric multilayer film formed on the input facet 4a of the third optical waveguide 4 as the other reflection facet, and the reflectivity of the output facet 2b and the reflectivity of the input facet 4a are controlled.

To give a specific example of controlling the reflectivity, the output facet 2b of the first optical waveguide 2 is deposited with the optical thinfilm y1 that transmits 100% of pumping light and reflects 100% of a laser light reflected to the semiconductor laser, and the input facet 4a of the third optical waveguide 4 is deposited with the optical thinfilm y2 having the reflectivity of 10% to 30%. By increasing the reflectivity of the input facet 4a from 10% to 30%, the center wavelength of the laser light shifts to longer wavelength by about 5 nm, and therefore the reflectivity is calculated so that the laser light has the desired wavelength.

As a result, the light source according to Example 5 brings the same effect as the light source 100 according to Example 1.

Example 6

As shown in Fig. 7, the light source according to Example 6 of the present invention has the same configuration as the light source according to Example 5. According to Example 6, the output facet 2b of the optical fiber used as the first optical waveguide 2 is deposited with the optical thinfilm y1 that transmits 100% of pumping light and reflects 100% of a laser light reflected to the semiconductor laser, as in Example 5.

According to Example 6, as the wavelength selecting element 6 that has the maximum transmittance at the wavelength of 1110 nm, a 19-$\mu$m-thick etalon filter deposited with the optical thinfilm y3 having the reflectivity of 50% to 60% is arranged so that the laser light enters virtually normally.

In this case, the input facet 4a of the optical fiber used as the third optical waveguide 4 is deposited with an optical thinfilm having the reflectivity of 50% and the length of the optical fiber is made to about 20 m, whereby obtaining a stable fundamental wave of 1110 nm wavelength at the room temperature.

As described above, to obtain the fundamental wave in the bandwidth of 1060 nm to 1200 nm, highly stable wavelength and optical power can be obtained at the room temperature by making the length of the second optical waveguide 3 (optical fiber) doped with the rare earth to 10 m to 30 m. Moreover, even finer tuning of the wavelength can be performed by controlling the temperature of the second optical waveguide 3.

As to the desired wavelength, the reflectivity of the reflection mirror in the laser resonator is closely related to the length of the second optical waveguide 3, and therefore the reflectivity of the optical thinfilm on the input facet of the third optical waveguide 3 is determined in consideration of the length of the second optical waveguide 3. The reflectivity of the input facet of the third optical waveguide 4 is preferably in a range of 10% to 70%, and more preferably in a range of 40% to 70%. The length of the second optical waveguide 3 and the reflectivity of the input facet of the third optical waveguide 4 are determined within the above range so that the power of the fundamental wave is at maximum with the wavelength that has the maximum transmittance in the wavelength selecting element 6.

When the etalon filter is used as the wavelength selecting element 6, thickness of the etalon filter is in a range of 15 $\mu$m to 100 $\mu$m so that the transmittance of the desired wavelength of the fundamental wave is at maximum when the laser light enters virtually normally, and the etalon filter is arranged so that the laser light enters virtually normally to the filter surface. The etalon filter has a plurality of transmittance peaks, each of which is close to the maximum, and only one of the peaks needs to virtually match the desired wavelength of the fundamental wave. Moreover, by determining parameters according to the examples of the present invention so that the longitudinal-mode power of the fundamental wave that oscillates at a wavelength having another transmittance peak is sufficiently suppressed compared with the longitudinal-mode power of the fundamental wave that oscillates at the desired wavelength, highly stable fundamental wave can be obtained at the desired wavelength. The etalon filter does not present undesired ripples near the plurality of the transmittance peaks on a wavelength-transmittance curve, and a space between adjacent transmittance peaks can be controlled by the thickness of the filter. Therefore, with the thickness of the etalon filter described above, the space between the adjacent transmittance peaks can be sufficiently expanded, whereby suppressing effect of the longitudinal mode of the fundamental wave that oscillates at the undesired wavelength. The wavelength selecting element 6 can be an optical filter such as a bandpass filter in which the transmittance of the desired wavelength of the fundamental wave is at maximum.

Example 7

The light source according to Example 7 of the present invention has the same configuration as the light source according to Example 5, except that the wavelength selecting element 6 and the polarizer 7 are embodied by a single polarizer 17, as shown in Fig. 8.

The polarizer 17 that also functions as the wavelength selecting element 6 is made by reducing thickness of a typical polarizer from about 0.2 mm thickness to be as thin as the etalon (the wavelength selecting element 6), whereby having the function of the etalon.

There are two types of the polarizing functions of the polarizer 17: one is an absorbing type that transmits only linearly polarized wave in one direction and absorbs other polarization components, and the other is a reflecting type that reflects the other polarization components. The polarizer 17 can be any one of the absorbing type and the reflecting type. The reflecting type can be, for example, a parallel plate of about 20 to 30 $\mu$m thickness coated with a dielectric multilayer film, or a silica substrate with minute grooves and multilayers on it to form a photonic crystal structure. While the polarizer has a function of the wavelength selecting element according to Example 7, the wavelength selecting element can alternatively have a function of the polarizer. In short, a single optical element has functions of the wavelength selecting element and the polarizer.

According to Example 7, because the single polarizer 17 that has functions of the wavelength selecting element and the polarizer is used, the size of the light source can be reduced.

INDUSTRIAL APPLICABILITY

The light source according to the present invention is capable of generating a fundamental wave in the bandwidth of 1060 nm to 1200 nm, and also capable of tuning the wavelength of the fundamental wave in the order of 1 nm to be emitted. The fundamental wave thus generated can be used to generate an SHG in the bandwidth of 530 nm to 600 nm used in a laser microscope, a biomedical analyzer, a precise measuring instrument, and the like.

**Claims**

1. A light source that emits a laser light by oscillating a spontaneous emission light in a resonator, the light source comprising:

    a semiconductor laser;
    a first optical waveguide that guides a pumping light output from the semiconductor laser;
    a second optical waveguide that absorbs the pumping light output from the first optical waveguide and emits a spontaneous emission light having a wavelength longer than a wavelength of the pumping light;
    a third optical waveguide that guides a light output from the second optical waveguide to outside;
    at least one wavelength selecting element provided between the second optical waveguide and the third optical waveguide; and
    a resonator formed between the semiconductor laser side and an output side to outside sandwiching the wavelength selecting element, wherein
    a wavelength of the laser light is set by controlling length of the second optical waveguide.

2. A light source that emits a laser light by oscillating a spontaneous emission light in a resonator, the light source comprising:

    a semiconductor laser;
    a first optical waveguide that guides a pumping light output from the semiconductor laser;
    a second optical waveguide that absorbs the pumping light output from the first optical waveguide and emits a spontaneous emission light having a wavelength longer than a wavelength of the pumping light;
    a third optical waveguide that guides a light output from the second optical waveguide to outside;

at least one wavelength selecting element provided between the second optical waveguide and the third optical waveguide; and

a resonator formed between the semiconductor laser side and an output side to outside sandwiching the wavelength selecting element, wherein

a wavelength of the laser light is set by controlling temperature of the second optical waveguide.

3. A light source that emits a laser light by oscillating a spontaneous emission light in a resonator, the light source comprising:

a semiconductor laser;

a first optical waveguide that guides a pumping light output from the semiconductor laser;

a second optical waveguide that absorbs the pumping light output from the first optical waveguide and emits a spontaneous emission light having a wavelength longer than a wavelength of the pumping light;

a third optical waveguide that guides a light output from the second optical waveguide to outside;

at least one wavelength selecting element provided between the second optical waveguide and the third optical waveguide; and

a resonator formed between the semiconductor laser side and an output side to outside sandwiching the wavelength selecting element, wherein

a wavelength of the laser light is set by controlling concentration of rare-earth element doped in the second optical waveguide.

4. A light source that emits a laser light by oscillating a spontaneous emission light in a resonator, the light source comprising:

a semiconductor laser;

a first optical waveguide that guides a pumping light output from the semiconductor laser;

a second optical waveguide that absorbs the pumping light output from the first optical waveguide and emits a spontaneous emission light having a wavelength longer than a wavelength of the pumping light;

a third optical waveguide that guides a light output from the second optical waveguide to outside;

at least one wavelength selecting element provided between the second optical waveguide and the third optical waveguide; and

a resonator formed between the semiconductor laser side and an output side to outside sandwiching the wavelength selecting element, wherein

length, temperature, and concentration of rare-earth element of the second optical waveguide and reflectivities of reflecting mirrors at both facets of the resonator are set such that output power of the laser light is maximized at a wavelength at which transmissivity of the wavelength selecting element is maximized.

5. A light source that emits a laser light by oscillating a spontaneous emission light in a resonator, the light source comprising:

a semiconductor laser;

a first optical waveguide that guides a pumping light output from the semiconductor laser;

a second optical waveguide that absorbs the pumping light output from the first optical waveguide and emits a spontaneous emission light having a wavelength longer than a wavelength of the pumping light;

a third optical waveguide that guides a light output from the second optical waveguide to outside;

at least one wavelength selecting element provided between the second optical waveguide and the third optical waveguide; and

a resonator formed between the semiconductor laser side and an output side to outside sandwiching the wavelength selecting element, wherein

a wavelength of the laser light is set by controlling reflectivity of a facet of the resonator.

6. The light source according to any one of claims 1 to 5, wherein the wavelength selecting element is an etalon filter.

7. The light source according to any one of claims 1 to 6, wherein

the second optical waveguide is an optical fiber that includes a core and at least two cladding layers surrounding the core, and

at least the core is doped with rare-earth element.

8. The light source according to any one of claims 1 to 7, wherein the wavelength selecting element has a function of a polarizer.

# FIG.1

LIGHT SOURCE
100

RESONATOR
k

SECOND OPTICAL
WAVEGUIDE
3

THIRD OPTICAL
WAVEGUIDE
4

SEMICONDUCTOR
LASER
1

2
FIRST OPTICAL WAVEGUIDE

5a
LENS

5b
LENS

7
POLARIZER

6
WAVELENGTH SELECTING
ELEMENT

# FIG.2

k

21  22  31  32  33  41  42

2  2b(y)  3  5a  6  7  5b  4a(y)  4

# FIG.3

RESONATOR
k

SECOND OPTICAL
WAVEGUIDE

LIGHT SOURCE
200

SEMICONDUCTOR
LASER
1

THIRD OPTICAL
WAVEGUIDE
4

3

2
FIRST OPTICAL
WAVEGUIDE

5a
LENS

5b
LENS

h
HEATER

7
POLARIZER

c
TEMPERATURE
CONTROLLER

6
WAVELENGTH SELECTING
ELEMENT

# FIG.4

RESONATOR
k

LIGHT SOURCE
300

SECOND OPTICAL
WAVEGUIDE
13

THIRD OPTICAL
WAVEGUIDE
4

SEMICONDUCTOR
LASER
1

2
FIRST OPTICAL
WAVEGUIDE

5a
LENS

5b
LENS

7
POLARIZER

6
WAVELENGTH SELECTING
ELEMENT

# FIG.5

LIGHT SOURCE
400

RESONATOR
k

SECOND OPTICAL
WAVEGUIDE
13

THIRD OPTICAL
WAVEGUIDE
4

SEMICONDUCTOR
LASER
1

2
FIRST OPTICAL
WAVEGUIDE

h
HEATER

c
TEMPERATURE
CONTROLLER

5a
LENS

6
WAVELENGTH SELECTING
ELEMENT

7
POLARIZER

5b
LENS

# FIG.6

k

21    22    31    32    33         41    42

2    2b(y1)    3    5a    6    7    5b    4
4a(y2)

# FIG.7

# FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005012008 A